# EUROPEAN PATENT SPECIFICATION

(11) **EP 4 282 769 B1**
(45) Date of publication and mention of the grant of the patent: **04.12.2024**
(21) Application number: 22175883.2
(22) Date of filing: 27.05.2022
(51) Int. Cl.: B65D 8/00

(54) **CONNECTOR FOR CONNECTING AN ELECTRONIC DEVICE, ESPECIALLY AN ELECTRONIC TRACKING DEVICE, TO A CONTAINER, ELECTRONIC ASSEMBLY FOR A CONTAINER, AND CONTAINER ASSEMBLY**
VERBINDER ZUM VERBINDEN EINER ELEKTRONISCHEN VORRICHTUNG, INSBESONDERE EINER ELEKTRONISCHEN VERFOLGUNGSVORRICHTUNG, MIT EINEM BEHÄLTER, ELEKTRONISCHE ANORDNUNG FÜR EINEN BEHÄLTER UND BEHÄLTERANORDNUNG
CONNECTEUR POUR CONNECTER UN DISPOSITIF ÉLECTRONIQUE, EN PARTICULIER UN DISPOSITIF DE SUIVI ÉLECTRONIQUE, À UN CONTENEUR, ENSEMBLE ÉLECTRONIQUE POUR UN CONTENEUR ET ENSEMBLE CONTENEUR

(43) Date of publication of application: 29.11.2023
(73) Proprietor: ALPS Electric (Ireland) Ltd., Co. Cork (IE)
(72) Inventor: MCCORMACK, Stephen, Co. Cork (IE); MURPHY, Alan, Co. Cork (IE)
(74) Representative: Maiwald GmbH

(56) References cited:
- EP-A1- 2 281 753
- EP-A2- 3 926 542
- WO-A1-2018/154333
- GB-A- 2 446 392
- GB-A- 2 560 024
- US-A1- 2021 110 368
- US-B1- 10 809 122
- ANONYMOUS: "30 Degree Obtuse (Open) Angle From Steel-E.G. (Zinc Plated) With 3-1/2 in. Leg And 4-Holes", 18 April 2021 (2021-04-18), pages 1 - 2, XP093126503, Retrieved from the Internet <URL:https://www.industrialhardware.com/30-degree-obtuse-open-angle-from-steel-e-g-zinc-plated-with-3-1-2-in-leg-and-4-holes.html> [retrieved on 20240201]

## Description

The invention relates to a connector for connecting an electronic device, especially an electronic tracking device, to a container having a rounded cross-section.

The invention is additionally directed to an electronic assembly for a container having a rounded cross-section, comprising such a connector.

Furthermore, the invention relates to a container assembly. The container assembly comprises a container with a storage volume being delimited by a circumferentially closed shell defining a rounded cross-section, a first end plate, and a second end plate. The first end plate and the second end plate are arranged on opposite ends of the shell. A circumferentially closed collar extends from the first end plate on a side being opposed to the storage volume. The collar has a rim portion being bent towards an interior of the collar. Furthermore, the container assembly comprises a connector.

In the present context, a container having a rounded cross-section may be a keg or a gas cylinder. When using such containers, it may be desirable to attach an electronic device, e.g. an electronic tracking device, to the container. This has the advantage that the container can be tracked. Alternatively or additionally, data relating to the container or the content of the container may be stored on the electronic device. Further alternatively or additionally, the electronic device may be configured to establish a wireless data connection to other electronic devices. Such a data connection may be used to read data from the electronic device on the container and/or to write data on the electronic device on the container.

Independent from the specific functionality of the electronic device, it has been found that, mounting an electronic device on a container is rather tedious. Furthermore, rather complex and expensive means have to be used for attaching the electronic device to the container. This is mainly due to the rounded cross-section of the container.

In this context, EP 3 926 542 A2 discloses a housing that can be attached to a beverage container, without pre-positioning before fixing. Moreover, GB 2 446 392 A shows a plastic upper chime and a keg assembly for beverage kegs. Furthermore, EP 2 281 753 A1 discloses a plastic beer keg. US 10,809,122 B1 discloses components of a weighing module and a mechanism for coupling to a fixture.

It is therefore an objective of the present invention to provide a simple and cost-efficient solution for mounting an electronic device on a container having a rounded cross-section. The problem is solved by a connector for connecting an electronic device, especially an electronic tracking device, to a container having a rounded cross-section. The connector, as disclosed in claim 1, comprises a support plate with a substantially planar connection surface being configured to support the electronic device when the electronic device is mounted to the connector. Moreover, the connector comprises at least one engagement wall extending from a first end of the support plate and being configured to engage a rim portion of a collar of the container. Additionally, the connector comprises two mounting holes being located in the support plate. Each of the mounting holes is configured to receive a fixation element which protrudes from the support plate in a direction opposite to the connection surface and opposite to the engagement wall such that a distal end of the fixation element may abut against a connection region of the container between an end plate of the container and the collar. Using such a connector, an electronic device may be mounted in a simple, reliable and quick manner on a container having a rounded cross-section. Furthermore, such a connector is structurally simple. Due to the planar connection surface on the support plate, an electronic device can be secured to the connector. It is possible to secure a great variety of different electronic devices to such a connection surface. Moreover, the present invention uses the fact that containers having a rounded cross-section have a collar with a rim portion. The engagement wall is specifically adapted to engage the rim portion. This leads to a stable connection between the connector and the container. A modification of the container is not necessary. The mounting holes are arranged such that a distal end of a fixation element being located therein, may abut against a connection region of the container between an end plate of the container and the collar. In doing so, the distal end of the fixation element pushes the engagement wall into the rim portion while the distal end pushes into the connection region. In other words, the connector is clamped between the rim portion and the connection region. Using the fixation element, a tensioning force may be applied which has the effect, that, due to frictional engagement, the connector is also blocked from sliding along an extension of the rim portion.

According to the invention, the engagement wall and the support plate enclose an obtuse angle. The angle may be 100° to 150°, preferably 115° to 135°, more preferably 120° to 125°. This facilitates the access to the mounting holes and a fixation element which may be located therein. Furthermore, this configuration has the effect, that a fixation element being located in one of the mounting holes is able to create a reaction force component which is oriented into the same direction as the engagement wall. Consequently, the engagement wall is reliably pushed into the rim portion and securely held therein.

The connector may be formed as an injection molded piece. Additionally or alternatively, the connector may be formed as a uniform piece, i.e. all the elements of the connector are formed as portions of an integral piece.

As has been mentioned before, the container having a rounded cross-section may be a keg or a gas cylinder. Of course, also other types of containers are possible. A rounded cross-section may be circular or elliptical. Alternatively, a rounded cross-section may relate to a cross section of any form as long as it is delimited by at least one curved segment. This may be the case for a polygon with rounded corners.

The connector may be made from a material which is resistant to chemicals and wash methods in the keg industry and/or in industries using gas cylinders. Moreover, the forces involved in fixing and holding the connector on the container and the electronic device on the connector may be chosen such that the electronic device may be held on the container over a lifetime.

Preferably, the material from which the connector is made, is stable with respect to UV radiation.

According to the invention, the engagement wall is convexly curved for having a two-dimensional contact with the collar. In the present context, the engagement wall is convexly curved into a direction away from the support plate. This means that the convexity is oriented towards an environment of the connector. Preferably, a curvature of the engagement wall substantially corresponding to a curvature of the collar at the position where the connector is to be mounted to the container. Thus, the engagement wall has at least a two-dimensional contact with the collar or, more specifically, the rim portion. This leads to a reliable connection between connector and container.

It is noted that, of course, the connector may comprise more than one engagement wall. In such a case, each of the connection walls may be convexly curved. The engagement walls may be arranged adjacent to one another along the first end of the support plate. Between neighboring engagement walls, there may be gaps. The size and shape of these gaps may be chosen depending on the specific application of the connector.

In an example, an end portion of the engagement wall being arranged opposite the support plate comprises an insertion slope. The insertion slope facilitates the engagement of the engagement wall with the rim portion of the collar. In other words, due to the insertion slope, the engagement wall can be easily and reliably slid into an interior of the rim portion. Consequently, the connector may be mounted to the container in a rather quick manner.

It is possible that the support plate of the connector comprises a concavely curved reception contour at a second end of the support plate being arranged opposite the first end. The concavely curved reception contour is configured to receive a portion of an end plate of the container which together with the collar forms the connection region. Such an end plate may be domed. Consequently, mounting the connector, especially bringing the engagement wall into engagement with the rim portion, is facilitated by the concavely curved configuration of the reception contour. The concave shape is oriented towards the interior of the connector, i.e. it forms a recess on the outer circumference of the connector.

In this context, the concavely curved reception contour may be a section of a surface of a sphere. Thus, when mounting the connector on the container, a two-dimensional contact may be established between the connector and a domed end plate of the container.

According to an alternative, the support plate comprises a reinforcement structure being arranged opposite the connection surface. In a mounted state, the reinforcement structure is arranged on a lower side of the connector. This renders the support plate mechanically stable. The same applies to the connector as a whole.

The reinforcement structure may comprise ribs. For example one or more ribs are provided which extend substantially parallel to the first end of the support plate. Optionally, one or more ribs may extend at an angle with respect to the first ribs. The second ribs may be designated as cross ribs. Further optionally, adjacent to one of the mounting holes, the reinforcement structure may comprise a reinforcement collar fully or partially surrounding the mounting hole.

Using a mechanically stable support plate offers the possibility to mount so-called tamper-proof electronic devices on the connection surface. Such devices have a switch on the lower side which is held in a pre-defined switching state by the connection surface. Tampering is detected, if this switch changes its switching state. This functionality may only be provided with the necessary reliability if the support plate is sufficiently stable. Otherwise, the risk of an erroneous tampering detection is elevated.

A middle axis of each of the mounting holes may extend perpendicular to the connection surface. From a manufacturing perspective, such mounting holes may be produced in a simple and cost-efficient manner. Furthermore, such a configuration is advantageous as far as the transmission of forces from the distal end of a fixation element into the engagement wall is concerned.

Moreover, an inner surface of each of the mounting holes may be threaded or a thread insert may be arranged in each of the mounting holes. Such a mounting hole may cooperate with fixation elements being threaded bolts which are well-known fixation elements. This offers the possibility to mount the connector to the container using standard fixation elements and standard tools.

The thread insert may be made from a brass material.

In a case in which a thread insert is arranged in the at least one mounting hole, the thread insert may be mounted in the mounting hole from a side of the support plate which is arranged opposite to the connection surface. This has the effect, that in a mounted state of the connector, the threaded bolt cooperating with the thread insert pushes the thread insert into its position. Thus, this configuration is very stable. Moreover, this configuration has the advantage that the thread insert may not be pulled out of the mounting hole in a situation in which the connector is mounted on the container. This is a security feature being effective against undesired manipulation of the connector and an electronic device being mounted thereto.

According to the invention, the connector comprises also at least one lateral protection wall extending from a third end of the support plate in a direction opposite to the direction of extension of the engagement wall. The third end may be arranged between the first end and the second end. In a mounted state of the connector, the lateral protection wall extends into a space between the support plate and the container, especially being formed by the collar and an end plate of the container. This has the effect, that objects are hindered from entering the space between the support plate and the connection region of the container. The object may be dirt or any other undesired particle. Alternatively, the object may be a tool or means used for forcibly removing the connector from the container.

Of course, the connector may also comprise two lateral protection walls being arranged opposite each other, i.e. extending from the third end and a fourth end respectively. The fourth end is arranged opposite the third end.

The problem is additionally solved by an electronic assembly for a container having a rounded cross-section. The electronic assembly comprises a connector according to the invention and an electronic device, especially an electronic tracking device. The electronic device is supported on the connection surface of the connector. In a case in which the electronic device is a tracking device, the electronic assembly may be designated as a tracker assembly. The electronic assembly may be mounted to the connector using the mounting holes. Such an electronic assembly may be mounted in a simple, reliable and quick manner on a container having a rounded cross-section.

Moreover, the problem is solved by a container assembly. The container assembly comprises a container with a storage volume being delimited by a circumferentially closed shell defining a rounded cross-section, a first end plate, and a second end plate. The first end plate and the second end plate are arranged on opposite ends of the shell. A circumferentially closed collar extends from the first end plate on a side being opposed to the storage volume. The collar has a rim portion being bent towards an interior of the collar. The container assembly also comprises a connector according to the invention. The engagement wall of the connector engages the rim portion of the collar. Additionally, a fixation element is arranged in each of the mounting holes and protrudes from the support plate such that a distal end of each of the fixation elements abuts against a connection region between the first end plate and the collar. Thus, using the connector, an electronic assembly may be mounted on the container in a simple, reliable and quick manner. In this context, the region being defined by the collar of the container may also be called a chime.

As has already been mentioned before, the container may be a keg or a gas cylinder. The keg may be designed according to at least one of the standards "Euro", "DIN" or "slim". Of course, it is also possible that the keg is custom-built or corresponds to a standard being proprietary to a certain company or organization.

The container assembly may also comprise an electronic device, especially an electronic tracking device, wherein the electronic device is attached to the connector such that it is supported by the connection surface. In other words, the electronic assembly according to the invention is attached to the keg.

According to a variant, the electronic device is attached to the connector using the fixation element. Thus, the fixation element fulfils two functionalities. First, it attaches the electronic device to the connector. Second, it attaches the connector to the container. Using the same fixation element for two functionalities strongly reduces the effort for mounting the electronic device and the connector to the container. Moreover, since such a configuration reduces the number of parts, it is advantageous from a cost-perspective.

The fixation elements may be threaded bolts. Such fixation elements may be operated using standard tools. Moreover, such fixation elements are structurally simple and have an accepted reliability.

The rim portion of the collar may form an undercut being effective along a direction from a circumference of the collar towards an interior of the collar and/or being effective in a direction being oriented away from the first end plate. Thus, the engagement wall may only be inserted when being moved in a direction away from the first end plate. Once a portion of the engagement wall is arranged in the undercut, it can only be removed therefrom by moving it towards the first end plate. However, in a mounted state, this direction of movement is blocked by the fixation element. Consequently, the connector and an electronic device being attached thereto, are mounted on the container in a stable and reliable manner.

It is noted that all advantages and effects which have been explained for one aspect of the invention also apply mutatis mutandis to all other aspects of the invention.

It is further noted that the connector may be adapted to different containers, e.g. different kegs or different gas cylinders. This may be done by adjusting a height of the engagement wall accordingly. Additionally or alternatively, the obtuse angle between the engagement wall and the support plate may be adjusted. Further alternatively or additionally, the curvature of the engagement wall may be adapted such that it corresponds to a curvature of the collar of the relevant container. Optionally, also the curvature of the reception contour may be adapted. Another option is to adapt the length of the fixation element.

It is also possible to adapt the connector to different electronic devices. In order to do so, a distance between mounting holes and a size of the mounting holes may be adapted. Moreover, slots for straps or zip ties may be provided if it is desired to connect an electronic device to the connector via straps or zip ties.

Examples of the disclosure will be described in the following with reference to the drawings.
- Figure 1: shows a container assembly according to the invention, comprising an electronic assembly according to the invention and a connector according to the invention, in a perspective view,
- Figure 2: shows the container assembly of Figure 1 in an exploded view,
- Figure 3: shows the container assembly of Figures 1 and 2 in a cross sectional view along III-III in Figure 1,
- Figure 4: shows the connector of Figures 1 to 3 in a separate, perspective view,
- Figure 5: shows the connector of Figure 4 from a different perspective,
- Figure 6: shows a container assembly according to an alternative embodiment of the invention comprising an electronic assembly according an alternative embodiment of the invention and a connector according to an alternative embodiment of the invention, in an exploded view, and
- Figure 7: shows the connector of Figure 6 in a separate, perspective view.

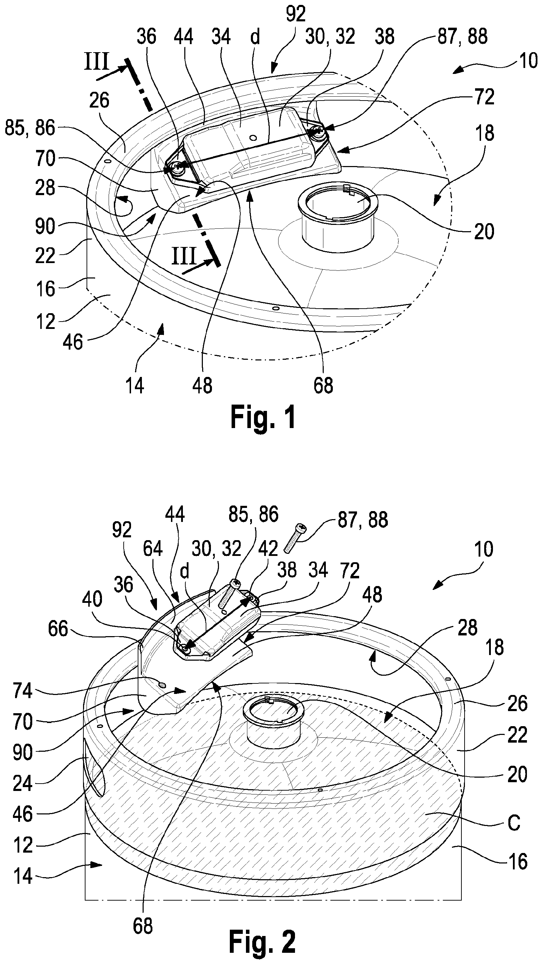

Figure 1 shows a container assembly 10.

The container assembly 10 comprises a container 12.

In the examples shown in the figures, the container is a keg. For this reason, the terms keg and container will be used interchangeably when describing the figures.

The container 12 has a storage volume 14 being delimited by a circumferentially closed shell 16.

The circumferentially closed shell 16 generally defines rounded cross-section C (cf. figure 2). The kegs represented in the Figures have a circular cross-section C.

Moreover, the storage volume 14 is delimited by a first end plate 18. The first end plate 18 is arranged at a first axial end of the shell 16.

The first end plate 18 is domed towards an outside of the storage volume 14.

Moreover, at a center of the first end plate 18, a nozzle 20 is arranged. The storage volume 14 is accessible through the nozzle 20.

At a second axial end of the shell 16, which is not visible in the figures, a second end plate is arranged. The second end is arranged opposite to the first end. Thus, the storage volume 14 is delimited by the shell 16, the first end plate 18 and the second end plate.

Also the second end plate is domed towards an outside of the storage volume 14.

Moreover, a circumferentially closed collar 22 extends from the first end plate 18 on a side being opposed to the storage volume 14.

In the collar 22, at least one grip hole 24 is provided in order to facilitate manual maneuvering of the container 12.

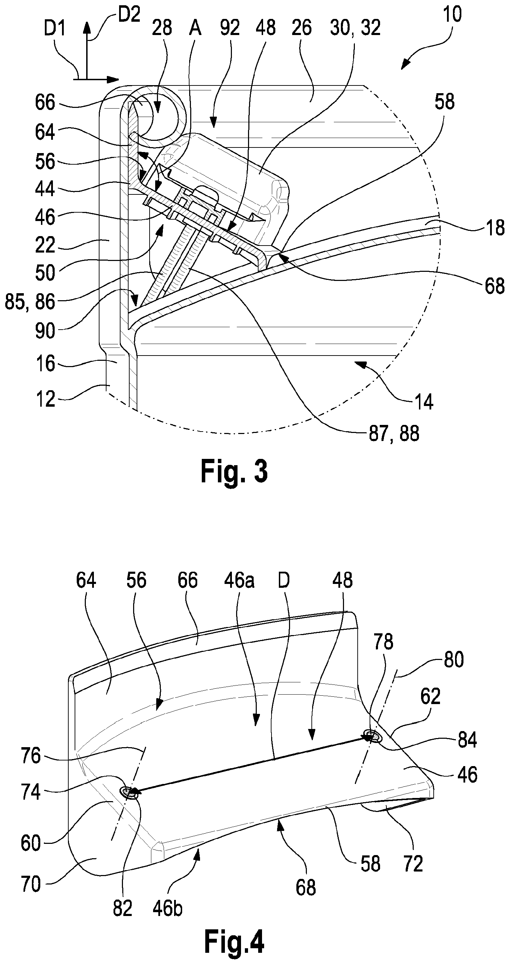

Additionally, the collar 22 has a rim portion 26 being bent towards an interior of the collar 22 (see especially Figure 3).

The rim portion 26 forms an undercut 28 being effective along a direction D1 from a circumference of the collar 22 towards an interior of the collar 22 and in a direction D2 being oriented away from the first end plate 18 (cf. Figure 3).

Such containers 12 or kegs are for example used to store and/or transport beverages.

The container assembly 10 additionally comprises an electronic device 30 which in the present example is an electronic tracking device 32.

The electronic device 30 comprises a main body 34, wherein on two opposing sides of the main body 34, fastening portions 36, 38 extend from the main body. Each fastening portion 36, 38 has a through hole 40, 42.

The electronic device 30 is mounted on the container 12 via a connector 44.

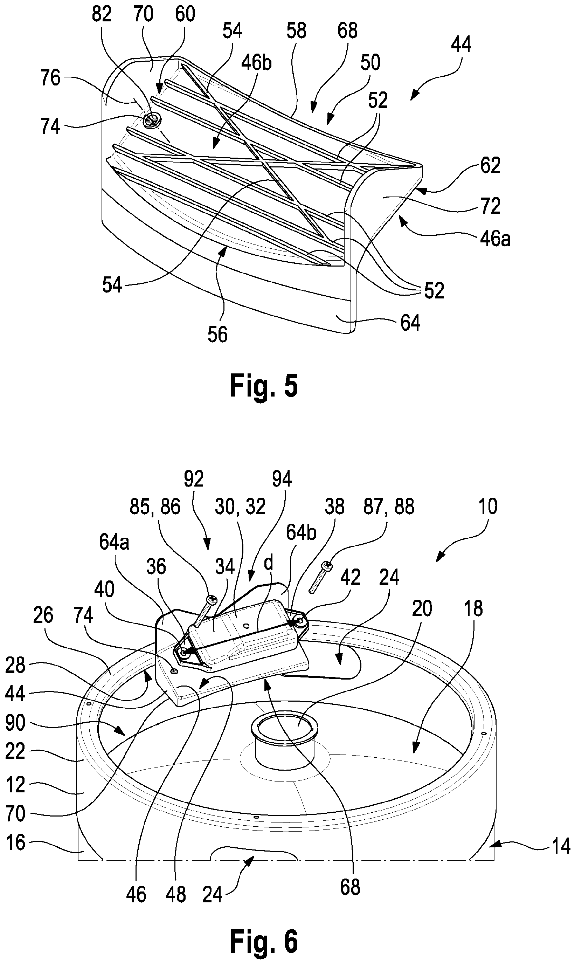

The connector 44 is shown in detail in Figures 4 and 5.

The connector 44 comprises a support plate 46 which, on a first side 46a, has a substantially planar connection surface 48. The planar connection surface 48 is configured to support the electronic device 30 as will be explained in detail further below.

On a second side 46b of the support plate 46, there is provided a reinforcement structure 50.

In the example shown in the Figures, the reinforcement structure 50 comprises five ribs 52 of a first type extending substantially along a longitudinal extension of the support plate 46 (cf. Figure 5).

Additionally, two ribs 54 of a second type are provided which extend diagonally such that they cross each other and the ribs 52 of the first type.

Due to the reinforcement structure 50, the support plate 46 is mechanically stable while being light-weight at the same time.

Spanning between the first side 46a and the second side 46b, the support plate 46 has a first end 56, a second end 58, a third end 60 and a fourth end 62.

An engagement wall 64 extends from the first end 56.

The engagement wall 64 and the support plate 46 enclose an obtuse angle A as can best be seen in Figure 3.

The engagement wall 64 and the first end 56 are convexly curved towards an outside of the support plate 46. Thereby, the curvature corresponds substantially to a curvature of the collar 22.

Furthermore, an end portion of the engagement wall 64 being arranged opposite the support plate 46, i.e. a free end of the engagement wall 64, comprises an insertion slope 66.

As will be explained in further detail below, the engagement wall 64 is configured to engage the rim portion 26 of the collar 22.

At the second end 58, which is arranged opposite the first end 56, the support plate 46 comprises a concavely curved reception contour 68. In simplified words, the concavely curved reception contour 68 is a recess.

The shape of the concavely curved reception contour 68 corresponds to the outer shape of the domed first end plate 18.

Moreover, both on the third end 60 and on the fourth end 62, a lateral protection wall 70, 72 extends from the support plate 46 respectively.

Both lateral protection walls 70, 72 are generally triangular and extend from the support plate 46 in a direction opposite to the direction of extension of the engagement wall 64.

The connector 44 also comprises a first mounting hole 74 having a first middle axis 76 and a second mounting hole 78 having a second middle axis 80.

Both middle axes 76, 80 extend perpendicular to the connection surface 48.

Moreover, in each of the first mounting hole 74 and the second mounting hole 78, a thread insert 82, 84 is arranged.

A distance D between the first mounting hole 74 and the second mounting hole 78 is configured such that it corresponds to a distance d between the through hole 40 and the through hole 42.

In a state in which the connector 44 and the electronic device 30 are mounted to the container 12, the engagement wall 64 engages the rim portion 26 of the collar 22.

In order to move the engagement wall 64 into this position, the connector 44 is arranged in the vicinity of the collar 22 and then the engagement wall 64 is pivoted into engagement with the rim portion 26. While doing so and in a position of the connector 44 in which the engagement wall 64 engages the rim portion 26, a part of the first end plate 18 may be received in the reception contour 68. This facilitates the engagement of the engagement wall 64 and the rim portion 26.

Moreover, in the mounted state of the connector 44 and the electronic device 30, a first fixation 85 element being a first threaded bolt 86 extends through the through hole 40 and through the first mounting hole 74. The first threaded bolt 86 cooperates with the thread insert 82.

A second fixation element 87 being a second threaded bolt 88 extends through the through hole 42 and through the second mounting hole 78. The second threaded bolt 88 cooperates with the thread insert 84.

The electronic device 30 is supported on the connection surface 48 and attached to the connector 44 via the first threaded bolt 86 and the second threaded bolt 88.

Distal ends of both the first threaded bolt 86 and the second threaded bolt 88 protrude from the support plate 46 in a direction opposite to the connection surface 48 and opposite to the engagement wall 64.

The distal ends of the first threaded bolt 86 and the second threaded bolt 88 abut against a connection region 90 of the container 12 between the first end plate 18 of the container 12 and the collar 22.

The first threaded bolt 86 and the second threaded bolt 88 are inserted into the corresponding thread inserts 82, 84 such that the connector 44 and the threaded bolts 86, 88 are tensioned between the connection region 90 and the under cut 28 of the rim portion 26.

Consequently, the connector 44 and the electronic device 30 are fixedly attached to the container 12. In other words, the connector 44 and the electronic device 30 are clamped between the connection region 90 and the rim portion 26.

In this context, the connector 44 and the electronic device 30 together may also be designated as an electronic assembly 92.

It is emphasized that the same fixation elements 85, 87, i.e. the first threaded bolt 86 and the second threaded bolt 88, are used for mounting the electronic device 30 on the connector 44 and for mounting both on the container 12.

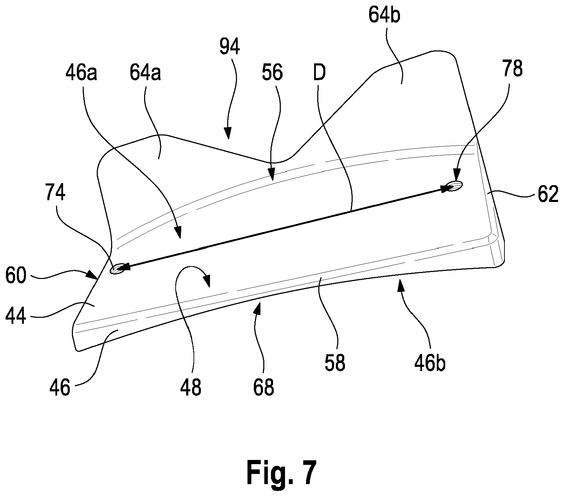

Figures 6 and 7 show an alternative embodiment of the container assembly 10, the connector 44 and the electronic assembly 92.

In the following, only the differences with respect to the above embodiment will be explained. The same reference signs are used for the same or corresponding elements.

In the embodiment of Figures 6 and 7, the connector 44 comprises two engagement walls 64a, 64b. the engagement walls 64a, 64b are separated from one another by a substantially V-shaped gap 94.

Beyond that, reference is made to the above explanations which apply mutatis mutandis to the embodiment of Figures 6 and 7.

### Reference signs

- 10: container assembly
- 12: container
- 14: storage volume
- 16: shell
- 18: first end plate
- 20: nozzle
- 22: collar
- 24: grip hole
- 26: rim portion
- 28: undercut
- 30: electronic device
- 32: electronic tracking device
- 34: main body
- 36: fastening portion
- 38: fastening portion
- 40: through hole
- 42: through hole
- 44: connector
- 46: support plate
- 46a: first side of the support plate
- 46b: second side of the support plate
- 48: connection surface
- 50: reinforcement structure
- 52: rib of a first type
- 54: rib of a second type
- 56: first end
- 58: second end
- 60: third end
- 62: fourth end
- 64: engagement wall
- 64a: engagement wall
- 64b: engagement wall
- 66: insertion slope
- 68: reception contour
- 70: lateral protection wall
- 72: lateral protection wall
- 74: first mounting hole
- 76: first middle axis
- 78: second mounting hole
- 80: second middle axis
- 82: thread insert
- 84: thread insert
- 85: fixation element
- 86: first threaded bolt
- 87: fixation element
- 88: second threaded bolt
- 90: connection region
- 92: electronic assembly
- 94: gap

- A: angle
- C: cross-section
- d: distance
- D: distance
- D1: direction
- D2: direction

## Claims

1. Connector (44) for connecting an electronic device (30), especially an electronic tracking device (32), to a container (12) having a rounded cross-section (C), the connector (44) comprising:
a support plate (46) with a substantially planar connection surface (48) being configured to support the electronic device (30) when the electronic device (30) is mounted to the connector (44),
at least one engagement wall (64) extending from a first end (56) of the support plate (46) and being configured to engage a rim portion (26) of a collar (22) of the container (12), wherein the engagement wall (64) and the support plate (46) enclose an obtuse angle (A),
wherein two mounting holes (74, 78) are located in the support plate (46), each mounting hole (74, 78) configured to receive a fixation element (85, 87) which protrudes from the support plate (46) in a direction opposite to the connection surface (48) and opposite to the engagement wall (64) such that a distal end of the fixation element (85, 87) may abut against a connection region (90) of the container (12) between an end plate (18) of the container (12) and the collar (22) and
wherein the engagement wall (64) is convexly curved for having a two-dimensional contact with the collar (22), and
wherein at least one lateral protection wall (70, 72) extends from a third end (60) of the support plate (46) in a direction opposite to the direction of extension of the engagement wall (64).

2. Connector (44) according to any one of the preceding claims, wherein an end portion of the engagement wall (64) being arranged opposite the support plate (46) comprises an insertion slope (66).

3. Connector (44) according to any one of the preceding claims, wherein at a second end (58) of the support plate (46) being arranged opposite the first end (56), the support plate (46) comprises a concavely curved reception contour (68).

4. Connector (44) according to any one of the preceding claims, wherein the support plate (46) comprises a reinforcement structure (50) being arranged opposite the connection surface (48).

5. Connector (44) according to any one of the preceding claims, wherein a middle axis (76, 80) of each of the mounting holes (74, 76) extends perpendicular to the connection surface (48).

6. Connector (44) according to any one of the preceding claims, wherein an inner surface of each of the mounting holes (74, 78) is threaded or wherein a thread insert (82, 84) is arranged in each of the mounting holes (74, 78).

7. Electronic assembly (92) for a container (12) having a rounded cross-section (C), comprising
a connector (44) according to any one of the preceding claims and
an electronic device (30), especially an electronic tracking device (32), wherein the electronic device (30) is supported on the connection surface (48) of the connector (44).

8. Container assembly (10), comprising
a container (12) with a storage volume (14) being delimited by a circumferentially closed shell (16) defining a rounded cross-section (C), a first end plate (18), and a second end plate, wherein the first end plate (18) and the second end plate are arranged on opposite ends of the shell (16), and a circumferentially closed collar (22) extending from the first end plate (18) on a side being opposed to the storage volume (14), wherein the collar (22) has a rim portion (26) being bent towards an interior of the collar (22), and
a connector (44) according to any one of claims 1 to 6,
wherein the engagement wall (64) engages the rim portion (26) of the collar (22), and wherein a fixation element (85, 87) is arranged in each of the mounting holes (74, 78) and protrudes from the support plate (46) such that a distal end of each of the fixation elements (85, 87) abuts against a connection region (90) between the first end plate (18) and the collar (22).

9. Container assembly (10) according to claim 8, further comprising an electronic device (30), especially an electronic tracking device (32), wherein the electronic device (30) is attached to the connector (44) such that it is supported by the connection surface (48).

10. Container assembly (10) according to claim 9, wherein the electronic device (30) is attached to the connector (44) using the fixation elements (85, 87).

11. Container assembly (10) according to any one of claims 8 to 10, wherein the fixation elements (85, 87) are threaded bolts (86, 88).

12. Container assembly (10) according to any one of claims 8 to 11, wherein the rim portion (26) forms an undercut (28) being effective along a direction (D1) from a circumference of the collar (22) towards an interior of the collar (22) and/or being effective in a direction (D2) being oriented away from the first end plate (18).

## Patentansprüche

1. Verbinder (44) zum Verbinden einer elektronischen Vorrichtung (30), insbesondere einer elektronischen Verfolgungsvorrichtung (32), mit einem Behälter (12), der einen gerundeten Querschnitt (C) aufweist, wobei der Verbinder (44) umfasst:
eine Stützplatte (46) mit einer im Wesentlichen planaren Verbindungsfläche (48), die dazu eingerichtet ist, die elektronische Vorrichtung (30) zu stützen, wenn die elektronische Vorrichtung (30) an dem Verbinder (44) montiert ist,
mindestens eine Eingriffnahmewand (64), die sich von einem ersten Ende (56) der Stützplatte (46) erstreckt und dazu eingerichtet, einen Randabschnitt (26) eines Bundes (22) des Behälters (12) in Eingriff zu nehmen, wobei die Eingriffnahmewand (64) und die Stützplatte (46) einen stumpfen Winkel (A) einschließen,
wobei sich zwei Montagelöcher (74, 78) in der Stützplatte (46) befinden, wobei jedes Montageloch (74, 78) dazu eingerichtet ist, ein Befestigungselement (85, 87) aufzunehmen, das von der Stützplatte (46) in einer Richtung vorsteht, die der Verbindungsfläche (48) entgegensetzt ist und der Eingriffnahmewand (64) entgegengesetzt ist, dergestalt, dass dass ein distales Ende des Befestigungselements (85, 87) an einer Verbindungsregion (90) des Behälters (12) zwischen einer Endplatte (18) des Behälters (12) und dem Bund (22) anliegen kann, und
wobei die Eingriffnahmewand (64) konvex gekrümmt ist, um einen zweidimensionalen Kontakt mit dem Bund (22) zu haben, und wobei sich mindestens eine seitliche Schutzwand (70, 72) von einem dritten Ende (60) der Stützplatte (46) in einer Richtung erstreckt, die der Erstreckungsrichtung der Eingriffnahmewand (64) entgegengesetzt ist.

2. Verbinder (44) nach einem der vorangehenden Ansprüche, wobei ein Endabschnitt der Eingriffnahmewand (64), der gegenüber der Stützplatte (46) angeordnet ist, eine Einführungsschräge (66) umfasst.

3. Verbinder (44) nach einem der vorangehenden Ansprüche, wobei die Stützplatte (46) an einem zweiten Ende (58) der Stützplatte (46), das dem ersten Ende (56) gegenüberliegt, eine konkav gekrümmte Aufnahmekontur (68) umfasst.

4. Verbinder (44) nach einem der vorangehenden Ansprüche, wobei die Stützplatte (46) eine Verstärkungsstruktur (50) umfasst, die gegenüber der Verbindungsfläche (48) angeordnet ist.

5. Verbinder (44) nach einem der vorangehenden Ansprüche, wobei sich eine Mittelachse (76, 80) jedes der Montagelöcher (74, 76) senkrecht zu der Verbindungsfläche (48) erstreckt.

6. Verbinder (44) nach einem der vorangehenden Ansprüche, wobei eine Innenfläche jedes der Montagelöcher (74, 78) mit einem Gewinde versehen ist, oder wobei ein Gewindeeinsatz (82, 84) in jedem der Montagelöcher (74, 78) angeordnet ist.

7. Elektronische Anordnung (92) für einen Behälter (12), aufweisend einen gerundeten Querschnitt (C), umfassend:
einen Verbinder (44) nach einem der vorangehenden Ansprüche, und
eine elektronische Vorrichtung (30), insbesondere eine elektronische Verfolgungsvorrichtung (32), wobei die elektronische Vorrichtung (30) an der Verbindungsfläche (48) des Verbinders (44) gestützt ist.

8. Behälteranordnung (10), umfassend:
einen Behälter (12) mit einem Speichervolumen (14), das durch eine umfänglich geschlossene Ummantelung (16), die einen gerundeten Querschnitt (C) definiert, eine erste Endplatte (18) und eine zweite Endplatte begrenzt ist, wobei die erste Endplatte (18) und die zweite Endplatte an gegenüberliegenden Enden der Ummantelung (16) angeordnet sind, und einen umfänglich geschlossenen Bund (22), der sich von der ersten Endplatte (18) auf einer Seite erstreckt, die dem Speichervolumen (14) gegenüberliegt, wobei der Bund (22) einen Randabschnitt (26) aufweist, der in Richtung eines Inneren des Bundes (22) gebogen ist, und einen Verbinder (44) nach einem der Ansprüche 1 bis 6,
wobei die Eingriffnahmewand (64) den Randabschnitt (26) des Bundes (22) in Eingriff nimmt, und wobei ein Befestigungselement (85, 87) in jedem der Montagelöcher (74, 78) angeordnet ist und von der Stützplatte (46) so vorsteht, dass ein distales Ende jedes der Befestigungselemente (85, 87) an einer Verbindungsregion (90) zwischen der ersten Endplatte (18) und dem Bund (22) anliegt.

9. Behälteranordnung (10) nach Anspruch 8, umfassend des Weiteren eine elektronische Vorrichtung (30), insbesondere eine elektronische Verfolgungsvorrichtung (32), wobei die elektronische Vorrichtung (30) so an dem Verbinder (44) angebracht ist, dass sie durch die Verbindungsfläche (48) gestützt ist.

10. Behälteranordnung (10) nach Anspruch 9, wobei die elektronische Vorrichtung (30) unter Verwendung der Befestigungselemente (85, 87) an dem Verbinder (44) angebracht ist.

11. Behälteranordnung (10) nach einem der Ansprüche 8 bis 10, wobei die Befestigungselemente (85, 87) Gewindebolzen (86, 88) sind.

12. Behälteranordnung (10) nach einem der Ansprüche 8 bis 11, wobei der Randabschnitt (26) eine Hinterschneidung (28) bildet, die entlang einer Richtung (D1) von einem Umfang des Bundes (22) in Richtung eines Inneren des Bundes (22) effektiv ist und/oder in einer Richtung (D2), die von der ersten Endplatte (18) fort weist, effektiv ist.

## Revendications

1. Élément de liaison (44) pour relier un dispositif électronique (30), en particulier un dispositif électronique de localisation (32), à un récipient (12) présentant une section transversale arrondie (C), l'élément de liaison (44) comprenant :
une plaque de support (46) avec une surface de liaison sensiblement plane (48) configurée pour supporter le dispositif électronique (30) lorsque le dispositif électronique (30) est monté sur l'élément de liaison (44), au moins une paroi d'accrochage (64) s'étendant à partir d'une première extrémité (56) de la plaque de support (46) et étant configurée pour accrocher une partie de rebord (26) d'un col (22) du récipient (12), dans lequel la paroi d'accrochage (64) et la plaque de support (46) forment un angle obtus (A),
dans lequel deux trous de montage (74, 78) sont situés dans la plaque de support (46), chaque trou de montage (74, 78) étant conçu pour recevoir un élément de fixation (85, 87) qui fait saillie de la plaque de support (46) dans une direction opposée à la surface de liaison (48) et opposée à la paroi d'accrochage (64) de sorte qu'une extrémité distale de l'élément de fixation (85, 87) peut venir en butée contre une région de liaison (90) du récipient (12) entre une plaque d'extrémité (18) du récipient (12) et le col (22), et
dans lequel la paroi d'accrochage (64) est incurvée de manière convexe pour avoir un contact bidimensionnel avec le col (22), et
dans lequel au moins une paroi de protection latérale (70, 72) s'étend à partir d'une troisième extrémité (60) de la plaque de support (46) dans une direction opposée à la direction d'extension de la paroi d'accrochage (64).

2. Élément de liaison (44) selon l'une quelconque des revendications précédentes, dans lequel une partie d'extrémité de la paroi d'accrochage (64) disposée à l'opposé de la plaque de support (46) comprend une pente d'insertion (66).

3. Élément de liaison (44) selon l'une quelconque des revendications précédentes, dans lequel au niveau d'une seconde extrémité (58) de la plaque de support (46) disposée à l'opposé de la première extrémité (56), la plaque de support (46) comprend un contour de réception incurvé de façon concave (68).

4. Élément de liaison (44) selon l'une quelconque des revendications précédentes, dans lequel la plaque de support (46) comprend une structure de renfort (50) disposée à l'opposé de la surface de liaison (48).

5. Élément de liaison (44) selon l'une quelconque des revendications précédentes, dans lequel un axe médian (76, 80) de chacun des trous de montage (74, 76) s'étend perpendiculairement à la surface de liaison (48).

6. Élément de liaison (44) selon l'une quelconque des revendications précédentes, dans lequel une surface intérieure de chacun des trous de montage (74, 78) est filetée ou dans lequel un insert fileté (82, 84) est disposé dans chacun des trous de montage (74, 78).

7. Ensemble électronique (92) pour récipient (12) à section transversale arrondie (C), comprenant :
un élément de liaison (44) selon l'une quelconque des revendications précédentes et un dispositif électronique (30), en particulier un dispositif électronique de localisation (32), dans lequel le dispositif électronique (30) est supporté sur la surface de liaison (48) de l'élément de liaison (44).

8. Ensemble récipient (10), comprenant :
un récipient (12) avec un volume de stockage (14) délimité par une coque circonférentiellement fermée (16) définissant une section transversale arrondie (C), une première plaque d'extrémité (18), et une seconde plaque d'extrémité, la première extrémité la plaque d'extrémité (18) et la seconde plaque d'extrémité sont disposées sur des extrémités opposées de la coque (16), et un col fermé circonférentiellement (22) s'étendant à partir de la première plaque d'extrémité (18) sur un côté opposé au volume de stockage (14), dans lequel le col (22) comporte une partie de rebord (26) courbée vers un intérieur du col (22), et
un élément de liaison (44) selon l'une quelconque des revendications 1 à 6,
dans lequel la paroi d'accrochage (64) accroche la partie de rebord (26) du col (22), et
dans lequel un élément de fixation (85, 87) est disposé dans chacun des trous de montage (74, 78) et dépasse de la plaque de support (46) de telle sorte qu'une extrémité distale de chacun des éléments de fixation (85, 87) bute contre une région de liaison (90) entre la première plaque d'extrémité (18) et le col (22).

9. Ensemble récipient (10) selon la revendication 8, comprenant en outre un dispositif électronique (30), en particulier un dispositif électronique de localisation (32), dans lequel le dispositif électronique (30) est fixé à l'élément de liaison (44) de telle sorte qu'il est supporté par la surface de liaison (48).

10. Ensemble récipient (10) selon la revendication 9, dans lequel le dispositif électronique (30) est fixé à l'élément de liaison (44) à l'aide des éléments de fixation (85, 87).

11. Ensemble récipient (10) selon l'une quelconque des revendications 8 à 10, dans lequel les éléments de fixation (85, 87) sont des boulons filetés (86, 88).

12. Ensemble récipient (10) selon l'une quelconque des revendications 8 à 11, dans lequel la partie de rebord (26) forme une contre-dépouille (28) efficace le long d'une direction (D1) depuis une circonférence du col (22) vers un intérieur du col (22) et/ou efficace dans une direction (D2) orientée à l'opposé de la première plaque d'extrémité (18) .
